# EUROPÄISCHE PATENTSCHRIFT

(11) **EP 0 892 829 B1**
(45) Veröffentlichungstag und Bekanntmachung des Hinweises auf die Patenterteilung: **22.09.2004**
(21) Anmeldenummer: 97915478.8
(22) Anmeldetag: 02.04.1997
(51) Int. Cl.: C08K 5/5313, C08K 5/34, C08L 67/00

(54) **SYNERGISTISCHE FLAMMSCHUTZMITTEL-KOMBINATION FÜR THERMOPLASTISCHE POLYMERE**
SYNERGISTIC FLAME PROTECTION AGENT COMBINATION FOR THERMOPLASTIC POLYMERS
COMBINAISON SYNERGIQUE D'AGENTS ANTIFEU POUR POLYMERES THERMOPLASTIQUES

(30) Priorität: 12.04.1996 DE 19614424
(43) Veröffentlichungstag der Anmeldung: 27.01.1999
(73) Patentinhaber: Clariant GmbH, 65929 Frankfurt am Main (DE)
(72) Erfinder: JENEWEIN, Elke, D-86368 Gersthofen (DE); KLEINER, Hans-Jerg, D-61476 Kronberg (DE); WANZKE, Wolfgang, D-86405 Meitingen (DE); BUDZINSKY, Winfried, D-65812 Bad Soden (DE)
(86) Internationale Anmeldenummer: PCT/EP1997/001664
(87) Internationale Veröffentlichungsnummer: WO 1997/039053

(56) Entgegenhaltungen:
- EP-A- 0 006 568
- EP-A- 0 699 708
- DE-A- 2 252 258
- FR-A- 2 422 698
- US-A- 3 594 347
- PATENT ABSTRACTS OF JAPAN vol. 018, no. 182 (C-1184), 29.März 1994 & JP 05 339417 A (ASAHI CHEM IND CO LTD), 21.Dezember 1993, & DATABASE WPI Section Ch, Week 0494 Derwent Publications Ltd., London, GB; Class A13, AN 94-031907
- PATENT ABSTRACTS OF JAPAN vol. 017, no. 420 (C-1093), 5.August 1993 & JP 05 086254 A (ASAHI CHEM CO LTD.), 6.April 1993, & DATABASE WPI Section Ch, Week 9318 Derwent Publications Ltd., London, GB; Class A18, AN 93-149347

## Beschreibung

Die Erfindung betrifft eine synergistische Flammschutzmittel-Kombination, die Calcium-, Aluminium- oder Zinkphosphinate und bestimmte synergistisch wirkende stickstoffhaltige Verbindungen enthält.

Polymere werden häufig dadurch flammwidrig ausgerüstet, daß man diesen phosphorhaltige oder halogenhaltige Verbindungen oder Gemische davon zusetzt. Auch Gemische von phosphor- und stickstoffhaltigen Verbindungen werden oft als Flammhemmer verwendet.

Alkalisalze von Phosphinsäuren sind bereits als flammhemmende Zusätze für Polyester vorgeschlagen (DE-A-2 252 258). Sie müssen in Mengen bis zu 30 Gew.-% eingebracht werden und haben zum Teil einen ungünstigen korrosionsfördernden Einfluß auf die Verarbeitungsmaschinen.

Weiterhin sind die Salze von Phosphinsäuren mit einem Alkalimetall oder einem Metall aus der zweiten oder dritten Haupt- oder Nebengruppe des Periodensystems zur Herstellung flammwidriger Polyamid-Formmassen eingesetzt worden, insbesondere die Zinksalze (DE-A-2 447 727).

Calcium- und Aluminiumphosphinate haben sich in Polyestern als besonders wirksam erwiesen (EP-A-699 708). Allerdings ist die Herstellung dieser Phosphinate im technischen Maßstab relativ aufwendig und teuer, was die Einsatzmöglichkeiten der Produkte als Flammhemmer für Kunststoffe sehr stark limitiert.

Auch Kombinationen der genannten Phosphinsäuresalze mit den Stickstoffbasen Melamin, Dicyandiamid und Guanidin sind als Flammhemmer für verschiedene Kunststoffe vorgeschlagen worden (EP-A-0 006 568). Dabei wurden Mischungen mit bestimmten molaren Mengenverhältnissen von Phosphor und Stickstoff als besonders wirksame Flammhemmer gefunden.

Die genannten Stickstoffverbindungen wirken sich jedoch sehr nachteilig auf das Eigenschaftsbild der Kunststoffe aus oder sind in bestimmten Kunststoffen (etwa Polyester und Polyamid) schlecht oder gar nicht verarbeitbar. Nachteilig sind z.B. mangelnde Temperaturstabilität, zu hohe Flüchtigkeit, starke Basizität und mangelnde Verträglichkeit mit dem Kunststoff.

Nach den Beispielen der vorgenannten Schrift ergibt sich jedoch zwangsläufig, dass gerade die Kombination von Metall-phosphinaten mit Melamin, Guanidin oder Dicyandiamid nur einen mäßigen Flammschutzeffekt zeigt, wobei dann ggf. sehr hohe Dosierungen notwendig sind. Wesentlich bessere Ergebnisse werden dagegen mit Addukten von Phosphinsäure und Melamin oder Guanidin erzielt, die aber nicht Gegenstand der vorliegenden Anmeldung und chemisch keineswegs mit Metallsalzen von Phosphinsäuren gleichzusetzen sind.

Überraschenderweise wurde gefunden, dass bestimmte Stickstoffverbindungen mit höherer Temperaturstabilität und geringer Flüchtigkeit, trotz z.T. niedrigeren N-Gehalts als bei den in der EP-A-0 006 568 genannten Verbindungen, in Kombination mit Calcium-, Aluminium- und Zink-Phosphinaten eine besonders gute Flammschutzwirkung zeigen und sich mit thermoplastischen Kunststoffen gut verarbeiten lassen. Die Mischungen dieser Stickstoffverbindungen ergeben durch synergistische Wirkung eine deutlich wirtschaftlichere Flammschutzausrüstung für thermoplastische Polymere, insbesondere für Polyester, als die Phosphinate allein. Auch sind mit der synergistische Flammschutzmittel-Kombination geringere Dosierungen bereits für eine gute Flammschutzwirkung ausreichend.

Gegenstand der Erfindung ist somit eine synergistische Flammschutzmittel-Kombination für thermoplastische Polymere, enthaltend als Komponente A ein Phosphinsäuresalz der Formel (I) und/oder ein Diphosphinsäuresalz der Formel (II) und/oder deren Polymere, 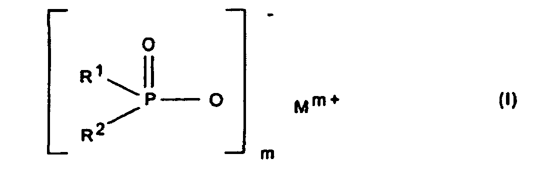 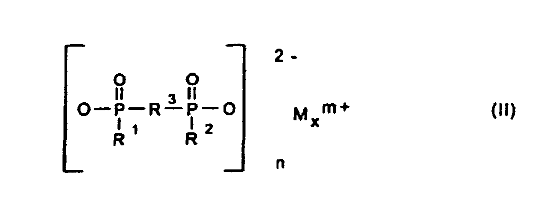 worin
- R¹, R²: C₁-C₆-Alkyl, vorzugsweise C₁-C₄-Alkyl, linear oder verzweigt;
- R³: C₁-C₁₀-Alkylen, linear oder verzweigt;
- M: Calcium-, Aluminium-, Zink-Ionen;
- m: 2 oder 3;
- n: 1 oder 3;
- x: 1 oder 2
bedeuten, und als Komponente B Stickstoffverbindungen der Formeln (III) bis (VIII) oder ein Gemisch hiervon 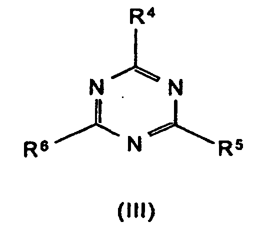 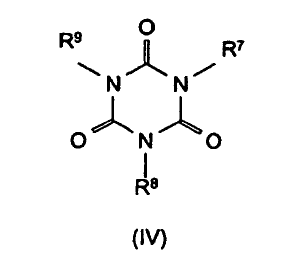 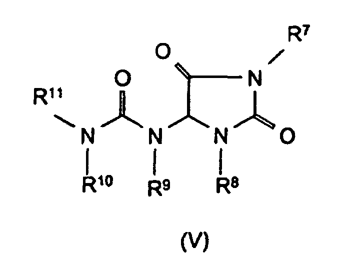 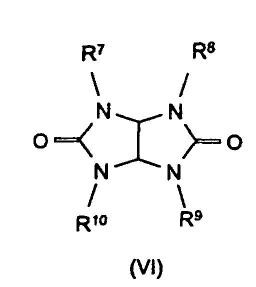 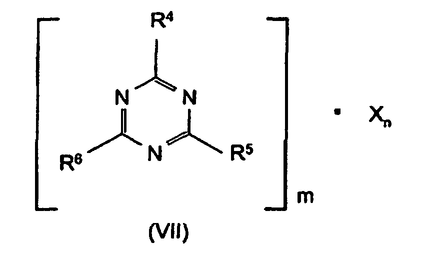 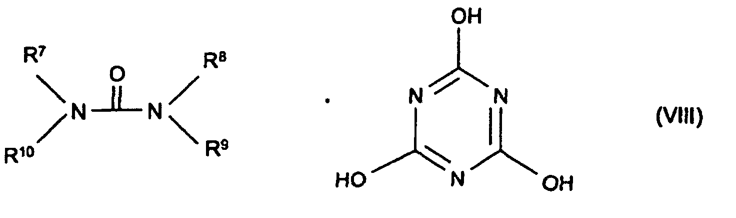 worin
R⁴ bis R⁶ Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder
-O-R⁴ und -N(R⁴)R⁵ oder N-alicyclisch oder N-aromatisch, mit der Maßgabe, daß R⁴ bis R⁶ nicht gleichzeitig Wasserstoff sind,
R⁷ bis R¹¹ die gleichen Gruppen kennzeichnen wie R⁴ bis R⁶ , mit Ausnahme der Substituenten -N(R⁴)R⁵ , N-alicyclisch und N-aromatisch
m und n unabhängig voneinander 1, 2, 3 oder 4,
X Säuren, die Addukte mit Triazinverbindungen (III) bilden können,
bedeuten.

Bevorzugt bedeutet M Aluminium-Ionen.

Bevorzugt handelt es sich bei der Komponente B um Benzuguanamin, Tris(hydroxyethyl)isocyanurat, Allantoin, Glycoluril, Melamincyanurat, Melaminphosphat, Dimelaminphosphat, Melaminpyrophosphat und Hamstoffcyanurat.

Die Erfindung betrifft auch die Verwendung der erfindungsgemäßen Flammschutzmittel-Kombination zur flammfesten Ausrüstung von thermplastischen Polymeren.

Die Erfindung betrifft auch die Verwendung der erfindungsgemäßen Flammschutzmittel-Kombination zur flammfesten Ausrüstung von technischen Kunststoffen der Art Potystyrol-HI, Polyphenylenether, Polyamide, Polyester, Polycarbonate und Blends oder Polyblends vom Typ ABS oder PC/ABS.

Insbesondere betrifft die Erfindung die Verwendung der erfindungsgemäßen Flammschutzmittel-Kombination zur flammfesten Ausrüstung von Polyestern.

Bevorzugt wird bei der Verwendung der erfindungsgemäßen Flammschutzmittel-Kombination die Komponente A und B unabhängig voneinander jeweils in einer Konzentration von 1 bis 30 Gew.-%, bezogen auf das fertige Polymercompound, eingesetzt.

Besonders bevorzugt werden die Komponenten A und B unabhängig voneinander jeweils in einer Konzentration von 3 bis 20 Gew.-%, bezogen auf das fertige Polymercompound, eingesetzt.

Besonders bevorzugt werden die Komponenten A und B unabhängig voneinander auch jeweils in einer Konzentration von 5 bis 15 Gew.-%, bezogen auf das fertige Polymercompound, eingesetzt.

Die Erfindung betrifft auch eine flammfest ausgerüstete thermoplastische Kunststoff-Formmasse, enthaltend die erfindungsgemäße Flammschutzmittel-Kombonation.

Bevorzugt handelt es sich dabei bei dem Kunststoff um technische Kunststoffe der Art Polystyrol-HI, Polyphenylenether, Polyamide, Polyester, Polycarbonate und Blends oder Polyblends vom Typ ABS oder PC/ABS.

Besonders bevorzugt handelt es sich bei dem Kunststoff um Polyester.

Im folgenden bezeichnet der Begriff "Phosphinsäuresalz" Salze der Phosphinsäure und Diphosphinsäuren und deren Polymere.

Die Phosphinsäurealze, die in wäßrigem Medium hergestellt werden, sind im wesentlichen monomere Verbindungen. In Abhängigkeit von den Reaktionsbedingungen können unter Umständen auch polymere Phosphinsäuresalze entstehen.

Geeignete Phosphinsäuren als Bestandteil der Phosphinsäuresalze sind beispielsweise:
Dimethylphosphinsäure, Ethyl-methylphosphinsäure, Diethylphosphinsäure, Methyln-propylphosphinsäure, Methan-di(methylphosphinsäure), Benzol-1.4-(dimethylphosphinsäure), Methyl-phenyl-phosphinsäure, Diphenylphosphinsäure.

Die Salze der Phosphinsäuren gemäß der Erfindung können nach bekannten Methoden hergestellt werden, die in der EP-A-699 708 näher beschrieben sind. Die Phosphinsäuren werden dabei in wäßriger Lösung mit Metallcarbonaten, Metallhydroxiden oder Metalloxiden umgesetzt.

Polymere im Sinne der Erfindung sind:
1. Polymere von Mono- und Diolefinen, beispielsweise Polypropylen, Polyisobutylen, Polybutylen, Polybuteh-1, Polyisopropren oder Polybutadien sowie Polymerisate von Cycloolefinen wie z.B. von Cyclopenten oder Norbornen; ferner Polyethylen (das gegebenenfalls vemetzt sein kann); z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE).
2. Mischungen der unter 1) genannten Polymeren, z.B. Mischungen von Polypropylen mit Polyisobutylen, Polypropylen mit Polyethylen (z.B. PP/HDPE, PP//LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere usw. Ferner Ethylen-Alkylacrylat-Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbomen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.
4. Polystyrol, Poly(p-methylstyrol), Poly-(α-methylstyrol).
5. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styröl, Styrol-Ethylen/Butylen-Styrol oder Styrol-Ethylen/Propylen-Styrol.
6. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien; Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.
7. Halogenhaltige Polymere, wie z.B. Polychloropren, Chlorkautschuk, chloriertes und bromiertes Copolymer aus Isobutylen-Isopren (Halobutylkatschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
8. Polymere, die sich von α,β-ungesättigten Säuren und deren Derivaten ableiten, wie Polyacrylate und Polymethacrylate, mit Butylacrylate schlagzäh modifizierte Polymethylmethacrylate, Polyacrylamide und Polyacrylnitrile.
9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
10. Polymere, die sich von ungesättigten Alkoholen und Aminen bzw. deren Acylderivaten oder Acetalen ableiten, wie Polyvinylalkohol, Polyvinylacetat, - stearat, -benzoat, -maleat, Polyvinylbutyral, Polyallylphthalat, Polyallylmelamin; sowie deren Copolymere mit in Punkt 1 genannten Olefinen.
11. Polyacetale, wie Polyoxymethylen, sowie solche Polyoxymethylene, die Comonömere, wie z.B. Ethylenoxid, enthalten; Polyacetale, die mit thermoplastischen Polyurethanen, Acrylaten oder MBS modifiziert sind.
12. Polyphenylenoxide und -sulfide und deren Mischungen mit Styrolpolymeren oder Polyamiden.
13. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 619, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylen-terephthalamid oder Poly-m-phenylen-isophthalamid. Block-Copolymere der vorstehend genannten Polyamide mit Polyolefinen, Olefin-Copolymeren, Ionomeren, oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").
14. Polyhamstoffe, Polyimide, Polyamidimide, Polyetherimide, Polyesterimide, Polyhydantoine und Polybenzimidazole.
15. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
16. Polycarbonate und Polyestercarbonate.
17. Polysulfone, Polyethersulfone und Polyetherketone.
18. Mischungen (Polyblends) der vorgenannten Polymeren,wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere.

Die Menge des den Polymeren zuzusetzenden Phosphinsäuresalzes der allgemeinen Formel I oder des Diphosphinsäuresalzes der Formel II kann innerhalb weiter Grenzen variieren. Im allgemeinen verwendet man 1 bis 30 Gew.-%, bezogen auf das fertige Polymercompound. Die optimale Menge hängt von der Natur des Polymeren, der Art der Komponente B und vom Typ des eingesetzten Phosphinsäuresalzes selbst ab und kann durch Versuche leicht bestimmt werden. Bevorzugt sind 3 bis 20, insbesondere 5 bis 15 Gew.-%.

Die Phosphinsäuresalze gemäß der Erfindung können je nach Art des verwendeten Polymeren und der gewünschten Eigenschaften in verschiedener physikalischer Form angewendet werden. So können die Phosphinsäuresalze z.B. zur Erzielung einer besseren Dispersion im Polymeren zu einer feinteiligen Form vermahlen werden. Falls erwünscht können auch Gemische verschiedener Phosphinsäuresalze eingesetzt werden.

Die Phosphinsäuresalze gemäß der Erfindung sind thermisch stabil, zersetzen die Polymeren weder bei der Verarbeitung noch beeinflußen sie den Herstellprozess der Kunststoff-Formmasse. Die Phosphinsäuresalze sind unter Herstellungs- und Verarbeitungsbedingungen für Polymere nicht flüchtig.

Als Komponente B enthält die synergistische Flammschutzmittel-Kombination eine Stickstoffverbindung der Formel (III) bis (VIII) oder ein Gemisch der durch die Formeln bezeichneten Verbindungen. Formel (VII) kennzeichnet Addukte der Triazinverbindungen (III) (einschließlich Melamin) mit geeigneten Säuren, wobei m und n jeweils 1 oder 2 sein können.
Beispiele für solche Verbindungen sind Melamincyanurat, Melaminphosphat, Melaminpyrophosphat, Melamindiborat usw.

Ebenfalls als Komponente B eingesetzt werden können oligomere Ester des Tris(hydroxyethyl)isocyanurats mit aromatischen Polycarbonsäuren, wie sie in der EP-A-584 567 beschrieben sind.

Bevorzugte Stickstoffverbindungen im Sinne der Erfindung sind Benzoguanamin (Formel III, R⁴ = Phenyl, R⁵ = R⁶ = -NH₂), Tris(hydroxyethyl)isocyanurat (Formel IV, R⁷ = R⁸ = R⁹ = -CH₂-CH₂-OH), Allantoin (Formel V, R⁷ = R⁸ = R⁹ = R¹⁰ = R¹¹ = H), Glycoluril (Formel VI, R⁷ = R⁸ = R⁹ = R¹⁰ = H) sowie Melamincyanurat, Melaminphosphat, Dimelaminphosphat und Melaminpyrophosphat (alle Typ Formel VII) und Harnstoffcyanurat (Typ Formel VIII).

Die als Komponente B eingesetzten Stickstoffverbindungen werden, z. T. industriell, nach bekannten Verfahren hergestellt.

Die Menge der den Polymeren zuzusetzenden Stickstoffverbindung (Komponente B) kann innerhalb weiter Grenzen variieren. Im allgemeinen verwendet man 1 bis 30 Gew.-% bezogen auf das fertige Polymercompound. Die optimale Menge hängt von der Natur des Polymeren, der Art des eingesetzten Phosphinats (Komponente A) sowie vom Typ der Stickstoffverbindung selbst ab und kann durch Versuche leicht bestimmt werden. Bevorzugt sind 3 bis 20, insbesondere 5 bis 15 Gew.-%.

Bevorzugte thermoplastische Polymere sind technische Kunststoffe wie z.B. Polystyrol-HI (mit erhöhter Schlagzähigkeit, s. Polymere unter Pkt. 5), Polyphenylenether, Polyamide, Polyester, Polycarbonate und Blends bzw. Polyblends wie ABS oder PC/ABS.

Besonders bevorzugte Polymere für die Verwendung der erfindungsgemäßen synergistischen Flammschutzmittel-Kombination sind Polyester. Dies sind Polymere, die sich wiederholende, über eine Estergruppe verbundene Einheiten in der Polymerkette enthalten. Besonders geeignete Polyester sind beispielsweise in "Ullmann's encyclopedia of industrial chemistry, ed. Barbara Elvers, Vol. 21 A, Kapitel 'Polyesters' (S. 227-251), VCH, Weinheim-Basel-Cambridge-New York 1992" beschrieben, worauf ausdrücklich Bezug genommen wird.

Die flammhemmenden Komponenten A und B können in Kunststoff-Formmassen eingearbeitet werden, indem z. B. alle Bestandteile als Pulver und/oder Granulat in einem Mischer vorgemischt und anschließend in einem Compoundieraggregat (z. B. einem Doppelschneckenextruder) in der Polymerschmelze homogenisiert werden. Die Schmelze wird üblicherweise als Strang abgezogen, gekühlt und granuliert. Die Komponenten A und B können auch separat über eine Dosieranlage direkt in das Compoundieraggregat eingebracht werden.

Es ist ebenso möglich, die flammhemmenden Zusätze A und B einem fertigen Polymergranulat beizumischen und die Mischung direkt auf einer Spritzgußmaschine zu Formteilen zu verarbeiten.

Bei Polyestern beispielsweise können die flammhemmenden Zusätze A und B auch bereits während der Polykondensation in die Polyestermasse gegeben werden.

Den Formmassen können neben den flammhemmenden Komponenten A und B auch Füll- und Verstärkungsstoffe wie Glasfasern, Glaskugeln oder Mineralien wie Kreide zugesetzt werden. Zusätzlich können die Formmassen noch andere Zusätze wie Antioxidantien, Lichtschutzmittel, Gleitmittel, Farbmittel;
Nukleierungsmittel oder Antistatika enthalten. Beispiele für die verwendbaren Zusätze sind in der EP-A-584 567 angegeben.

Die flammwidrigen Kunststoffmassen, insbesondere die Polyesterformmassen, eignen sich zur Herstellung von Formkörpern, Filmen Fäden und Fasern, z. B. durch Spritzgießen, Extrudieren oder Verpressen.

### Beispiele

### 1. Eingesetzte Komponenten

| | |
|---|---|
| Handelsübliche Polymere (Granulat) | |
| Polybutylenterephthalat (PBT-GV) | Celanex 2300 GV1/30 (Fa. Hoechst Celanese, USA) enthält 30 % Glasfasern. |
| (PBT) | Celanex 2500 (Fa. Hoechst Celanese, USA) enthält keine Füll- bzw. Verstärkungsstoffe. |
| Polyethylenterephthalat (PET-GV) | Impet 2600 GV1/30 (Fa. Hoechst AG, D) enthält 30 % Glasfasern. |
| (PET) | Polyclear T 86 (Fa. Trevira GmbH, D) enthält keine Füll- bzw. Verstärkungsstoffe. |
| Polyamid 6 (PA 6) | Durethan B29 (Fa. Bayer AG, D) enthält keine Füll- bzw. Verstärkungsstoffe |
| ABS-Polymer | Novodur P2X (Fa. Bayer AG, D) enthält keine Füll- bzw. Verstärkungsstoffe. |
| Polypropylen (PP) | Hostalen PPU 1080 (Fa. Hoechst AG, D) |

### Flammschutzmittelkomponenten (pulverförmig)

Aluminiumsalz der Dimethylphosphinsäure, im folgenden als DMPAL bezeichnet Aluminiumsalz der Methylethylphosphinsäure, im folgenden als MEPAL bezeichnet Aluminiumsalz der Methylpropylphosphinsäure, im folgenden als MPPAL bezeichnet

### Stickstoffhaltige Synergisten (pulverförmig):

Allantoin (Soc. Francaise Hoechst, F)
Benzoguanamin (Fa. SKW, D)
Glycoluril (Soc. Francaise Hoechst, F)
Hamstoffcyanurat (Chemie Linz, A)
Melamincyanurat (Fa. DSM, NL)
Melaminphosphat (Fa. DSM, NL)
TPS-THEIC = oligomerer Terephthalsäureester des Tris(hydroxyethyl)isocyanurats (nach EP-OS 584 562)

### Antioxidantien:

AO 1: Hostanox O 10 (Fa. Hoechst AG, D)
AO 2: Hostanox PAR 24 (Fa. Hoechst AG, D)

### Gleitmittel:

GL: Hoechst-Wachs E (Fa. Hoechst AG, D)

### 2. Herstellung, Verarbeitung und Prüfung von flammhemmenden Polymerformmassen

Die Flammschutzmittelkomponenten wurden in dem in den Tabellen angegebenen Verhältnis mit dem Polymergranulat und evtl. Additiven vermischt und auf einem Doppelschnecken-Extruder (Typ Leistritz LSM 30/34) bei Temperaturen von 230 bis 260 °C eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Toshiba IS 100 EN) bei Massetemperaturen von 240 bis 270 °C zu Prüfkörpern verarbeitet und anhand des UL 94-Tests (Underwriter Laboratories) auf Flammwidrigkeit geprüft und klassifiziert. Die Brennbarkeit der Prüfkörper wurde durch Bestimmung des Sauerstoffindex (LOI nach ASTM D 2863-77) beurteilt.

Tabelle 1 zeigt die Ergebnisse der Vergleichsbeispiele, in denen Phosphinsäuresalze als alleinige Flammschutzmittelkomponenten in PBT, PET sowie in PA 6 und ABS eingesetzt wurden.
Die Ergebnisse der Beispiele, in denen Phosphinsäuresalze in Kombination mit erfindungsgemäßen stickstoffhaltigen Verbindungen ausgeprüft wurden, sind in den Tabellen 2 bis 8 aufgelistet. Alle Mengenangaben sind als Gew.-% aufgeführt und beziehen sich auf das fertige Polymercompound einschließlich Flammschutzausrüstung.

**Tabelle 1:**

| Vergleichsbeispiele. Aluminiumsalze von Phosphinsäuren als alleinige Flammschutzmittelkomponente in PBT, PET, PA 6 und ABS. | | | | | | | | |
|---|---|---|---|---|---|---|---|---|
| Polymer | MEPAL [%] | DMPAL [%] | MPPAL [%] | AO 1 [%] | AO 2 [%] | GL [%] | Klasse nach UL 94 (1,5 mm) | LOI [%] |
| PBT- GV | 15 | | | 0,15 | 0,2 | | V1 | 48,5 |
| PBT- GV | 20 | | | 0,15 | 0,2 | | V0^{*)} | 49,5 |
| PBT- GV | | 20 | | | | | V0 | 46,0 |
| PBT- GV | | | 20 | 0,15 | 0,2 | | V0 | 50,0 |
| PBT | 10 | | | | | | V2 | |
| PBT | 15 | | | | | | V0 | |
| PET- GV | 5 | | | 0,15 | 0,2 | | V2 | 30,0 |
| PET- GV | 10 | | | 0,15 | 0,2 | | V0 | 36,5 |
| PET | 5 | | | 0,15 | 0,2 | | V2 | 28,0 |
| PET | 10 | | | 0,15 | 0,2 | | V0 | 41,5 |
| PA 6 | 15 | | | | | 0, 5 | V0 | 31,0 |
| ABS | 30 | | | | | | n.k.^{**)} | 52,5 |
| PP | 30 | | | | | | n.k.^{**)} | |

| | | | | | | | | |
|---|---|---|---|---|---|---|---|---|
| *) Klasse auch bei Prüfkörpern mit einer Dicke von 0,8 mm erreicht. | | | | | | | | |
| **) n.k. = nicht klassifizierbar | | | | | | | | |

**Tabelle 2:**

| Beispiele. Alumimiumsalze der Phosphinsäuren in Kombination mit stickstoffhaltigen Synergisten in PBT-GV. | | | | | | | | |
|---|---|---|---|---|---|---|---|---|
| MEPAL [%] | DMPAL [%] | MPPAL [%] | Synergist | Menge Synergist [%] | AO 1 [%] | AO 2 [%] | Klasse nach UL 94 (1,5 mm) | LOI [%] |
| 15 | | | Allantoin | 10 | 0,15 | 0,2 | V0 | 41,0 |
| 10 | | | Benzoguanamin | 5 | 0,15 | 0,2 | V0 | 41,0 |
| 15 | | | Benzoguanamin | 10 | 0,15 | 0,2 | V0^{*)} | |
| 10 | | | Glycoluril | 10 | 0,15 | 0,2 | V0 | 41,5 |
| 10 | | | Hamstoffcyanurat | 5 | 0,15 | 0,2 | V0 | 44,0 |
| 8 | | | Melamincyanurat | 6 | 0,15 | 0,2 | V1 | 48,0 |
| 10 | | | Melamincyanurat | 10 | 0,15 | 0,2 | V0^{*)} | 49,5 |
| 15 | | | Melamincyanurat | 10 | 0,15 | 0,2 | V0^{*)} | 50,0 |
| | 10 | | Melamincyanurat | 10 | | | V0 | 44,0 |
| | | 10 | Melamincyanurat. | 10 | 0,15 | 0,2 | V0 | 48,5 |
| 10 | | | Melaminphosphat | 5 | 0,15 | 0,2 | V0 | 33,5 |
| 10 | | | Metaminphosphat | 10 | 0,15 | 0,2 | V0 | 28,0 |
| 5 | | | TPS-THEIC | 15 | 0,15 | 0,2 | V1^{*)} | 31,5 |
| 10 | | | TPS-THEIC | 10 | 0,15 | 0,2 | V1 | 41,0 |
| 15 | | | TPS-THEIC | 10 | 0,15 | 0,2 | V0^{*)} | 48,5 |

| | | | | | | | | |
|---|---|---|---|---|---|---|---|---|
| *) Klasse auch bei Prüfkörpern mit einer Dicke von 0,8 mm erreicht. | | | | | | | | |

**Tabelle 3:**

| Beispiele. MEPAL in Kombination mit stickstoffhaltigen Synergisten in PBT. | | | | | | |
|---|---|---|---|---|---|---|
| MEPAL [%] | Synergist | Menge Synergist [%] | AO 1 [%] | AO 2 [%] | Klasse nach UL 94 (1,5 mm) | LOI [%] |
| 8 | Glycoluril | 7 | 0,15 | 0,2 | V0^{*)} | 33,5 |
| 5 | Melamincyanurat | 5 | 0,15 | 0,2 | V2 | 25,0 |
| 8 | Melamincyanurat | 7 | 0,15 | 0,2 | V0 | 34,0 |
| 8 | TPS-THEIC | 7 | 0,15 | 0,2 | V0 | 36,5 |

| | | | | | | |
|---|---|---|---|---|---|---|
| *) Klasse auch bei Prüfkörpern mit einer Dicke von 0,8 mm erreicht. | | | | | | |

**Tabelle 4:**

| Beispiele. MEPAL in Kombination mit stickstoffhaltigen Synergisten in PET-GV. | | | | | | |
|---|---|---|---|---|---|---|
| MEPAL [%] | Synergist | Menge Synergist [%] | AO 1 [%] | AO 2 [%] | Klasse nach UL 94 (1,5 mm) | LOI [%] |
| 6 | Benzoguanamin | 4 | 0,15 | 0,2 | V2 | 34,0 |
| 6 | Glycoluril | 4 | 0,15 | 0,2 | V2 | 29,0 |
| 6 | Melamincyanurat | 4 | 0,15 | 0,2 | V0 | 32,5 |
| 6 | Melaminphosphat | 4 | 0,15 | 0,2 | V2 | 35,5 |

**Tabelle 5:**

| Beispiele. MEPAL in Kombination mit stickstoffhaltigen Synergisten in PET. | | | | | | |
|---|---|---|---|---|---|---|
| MEPAL [%] | Synergist | Menge Synergist [%] | AO 1 [%] | AO 2 [%] | Klasse nach UL 94 (1,5 mm) | LOI [%] |
| 6 | Benzoguanamin | 4 | 0,15 | 0,2 | V2 | 27,5 |
| 6 | Glycoluril | 4 | 0,15 | 0,2 | V2 | 26,5 |
| 6 | Melamincyanurat | 4 | 0,15 | 0,2 | V2 | 27,0 |

**Tabelle 6:**

| Beispiele. MEPAL in Kombination mit stickstoffhaltigen Synergisten in PA 6. | | | |
|---|---|---|---|
| MEPAL [%] | Synergist | Menge Synergist [%] | Klasse nach UL 94 (1,5 mm) |
| 8 | Benzoguanamin | 8 | V2 |
| 8 | Melamincyanurat | 8 | V0 |
| 8 | Melaminphosphat | 8 | V0 |

**Tabelle 7:**

| Beispiele. MEPAL in Kombination mit stickstoffhaltigen Synergisten in ABS. | | | | |
|---|---|---|---|---|
| MEPAL [%] | Synergist | Menge Synergist [%] | Klasse nach UL 94 (1,5 mm) | LOI [%] |
| 15 | Benzoguanamin | - 15 | V2 | 33,5 |
| 15 | Glycoluril | 15 | V2 | 37,0 |
| 15 | Hamstoffcyanurat | 15 | V2 | 39,0 |
| 15 | Melamincyanurat | 15 | V1 | 36,5 |

**Tabelle 8:**

| Beispiele. MEPAL in Kombination mit stickstoffhaltigen Synergisten in PP. | | | |
|---|---|---|---|
| MEPAL [%] | Synergist | Menge Synergist [%] | Klasse nach UL 94 (1,5 mm) |
| 20 | Benzoguanamin | 10 | V2 |
| 20 | Glycoluril | 10 | V2 |
| 20 | Melamincyanurat | 10 | V2 |

Aus den Beispielen geht hervor, daß stickstoffhaltige Verbindungen in der erfindungsgemäßen Kombination mit Alkalisalzen der Phosphinsäuren eine sehr gute flammhemmende Wirkung zeigen. Die Menge an Phosphinsäuresalzen bezogen auf das fertige Polymercompound, die nötig ist, um eine V0- oder V1- oder V2-Einstufung zu erreichen, kann in der synergistischen Kombination deutlich verringert werden.

## Patentansprüche

1. Synergistische Flammschutzmittel-Kombination für thermoplastische Polymere, enthaltend als Komponente A ein Phosphinsäuresalz der Formel (I) und/oder ein Diphosphinsäuresalz der Formel (II) und/oder deren Polymere, 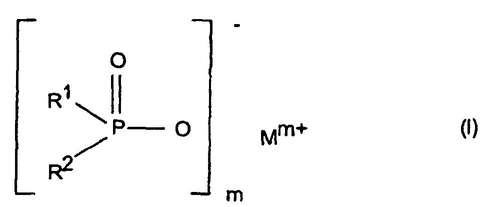 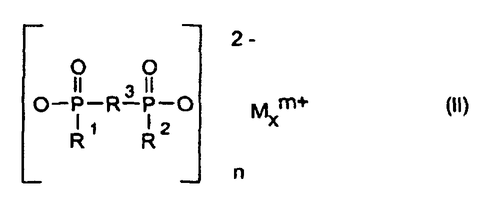 worin
R¹, R² C₁-C₆-Alkyl, vorzugsweise C₁-C₄-Alkyl, linear oder verzweigt;
R³ C₁-C₁₀-Alkylen, linear oder verzweigt;
M Calcium-, Aluminium-, Zink-Ionen;
m 2 oder 3;
n 1 oder 3;
x 1 oder 2
bedeuten, und als Komponente B Stickstoffverbindungen der Formeln (III) bis (VIII) oder ein Gemisch hiervon 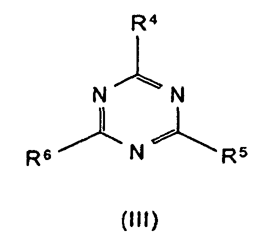 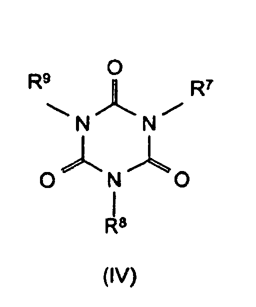 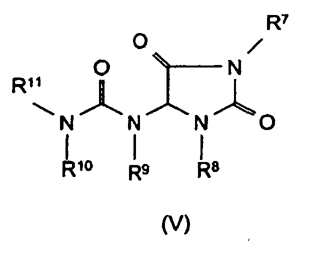 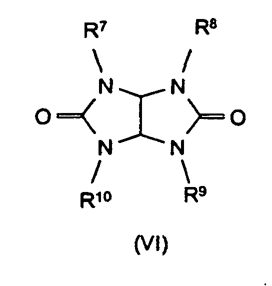 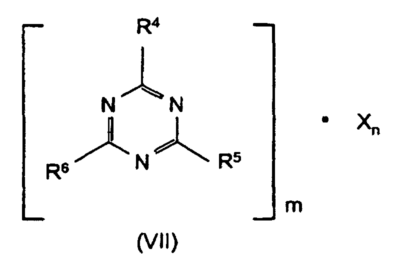 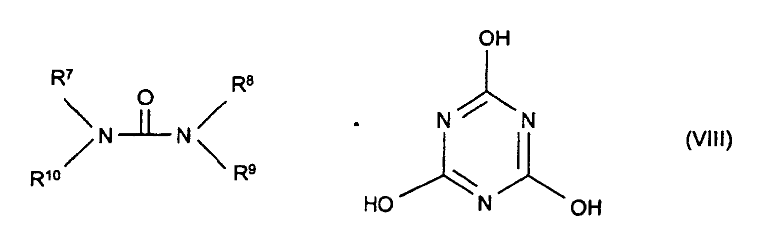 worin
R⁴ bis R⁶ Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -O-R⁴ und -N(R⁴)R⁵ oder N-alicyclisch oder N-aromatisch, mit der Maßgabe, daß R⁴ bis R⁶ nicht gleichzeitig Wasserstoff sind,
R⁷ bis R¹¹ die gleichen Gruppen kennzeichnen wie R⁴ bis R⁶ , mit Ausnahme der Substituenten -N(R⁴)R⁵ , N-alicyclisch und N-aromatisch
m und n unabhängig voneinander 1, 2, 3 oder 4,
X Säuren, die Addukte mit Triazinverbindungen (III) bilden können,
bedeuten.

2. Flammschutzmittel-Kombination gemäß Anspruch 1, **dadurch gekennzeichnet, dass** M Aluminium-Ionen bedeutet.

3. Flammschutzmittel-Kombination gemäß Anspruch 1 oder 2, **dadurch gekennzeichnet, dass** es sich bei der Komponente B um Benzuguanamin, Tris(hydroxyethyl)isocyanurat, Allantoin, Glycoluril, Melamincyanurat, Melaminphosphat, Dimelaminphosphat, Melaminpyrophosphat und Hamstoffcyanurat handelt

4. Verwendung einer Flammschutzmittel-Kombination gemäß einem oder mehreren der Ansprüche 1 bis 3 zur flammfesten Ausrüstung von thermplastischen Polymeren.

5. Verwendung einer Flammschutzmittel-Kombination nach Anspruch 4 zur flammfesten Ausrüstung von technischen Kunststoffen der Art Polystyrol-HI, Polyphenylenether, Polyamide, Polyester, Polycarbonate und Blends oder Polyblends vom Typ ABS oder PC/ABS.

6. Verwendung einer Flammschutzmittel-Kombination nach Anspruch 4 zur flammfesten Ausrüstung von Polyestern.

7. Verwendung einer Flammschutzmittel-Kombination nach einem oder mehreren der Ansprüche 4 bis 6, **dadurch gekennzeichnet, dass** Komponente A und B unabhängig voneinander jeweils in einer Konzentration von 1 bis 30 Gew.-%, bezogen auf das fertige Polymercompound, eingesetzt werden.

8. Verwendung einer Flammschutzmittel-Kombination nach einem oder mehreren der Ansprüche 4 bis 6, **dadurch gekennzeichnet, dass** Komponente A und B unabhängig voneinander jeweils in einer Konzentration von 3 bis 20 Gew.-%, bezogen auf das fertige Polymercompound, eingesetzt werden.

9. Verwendung einer Flammschutzmittel-Kombination nach einem oder mehreren der Ansprüche 4 bis 6, **dadurch gekennzeichnet, dass** Komponente A und B unabhängig voneinander jeweils in einer Konzentration von 5 bis 15 Gew.-%, bezogen auf das fertige Polymercompound, eingesetzt werden.

10. Flammfest ausgerüstete thermoplastische Kunststoff-Formmasse, enthaltend eine Flammschutzmittel-Kombonation gemäß einem oder mehreren der Ansprüche 1 bis 3.

11. Thermoplastische Kunststoff-Formmasse gemäß Anspruch 10, **dadurch gekennzeichnet, dass** es sich bei dem Kunststoff um technische Kunststoffe der Art Polystyrol-HI, Polyphenylenether, Polyamide, Polyester, Polycarbonate und Blends oder Polyblends vom Typ ABS oder PC/ABS handelt.

12. Thermoplastische Kunststoff-Formmasse gemäß Anspruch 10, **dadurch gekennzeichnet, dass** es sich bei dem Kunststoff um Polyester handelt.

## Claims

1. A synergistic flame retardant combination for thermoplastic polymers, comprising as component A a phosphinic salt of the formula (I) and/or a diphosphinic salt of the formula (II) and/or polymers thereof, 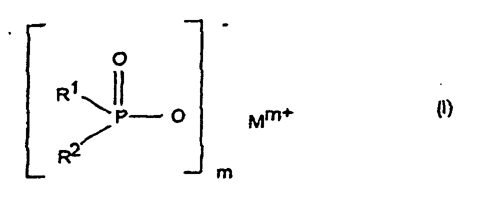 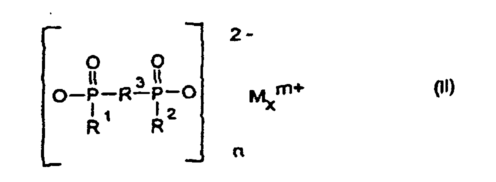 in which
R¹, R² are C₁-C₆-alkyl, preferably C₁-C₄-alkyl, and are linear or branched;
R³ is C₁-C₁₀-alkylene and is linear or branched;
M is calcium ions, aluminum ions, zinc ions;
m is 2 or 3;
n is 1 or 3;
x is 1 or 2,
and as component B nitrogen compounds of the formulae (III) to (VIII) or a mixture thereof 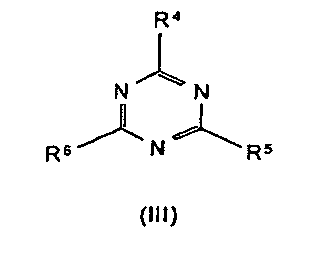 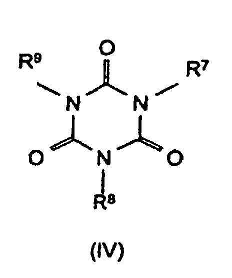 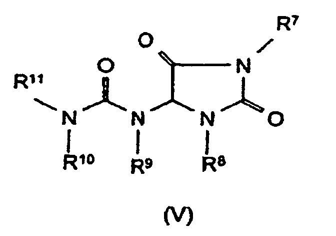 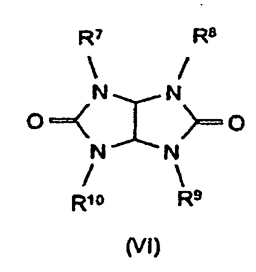 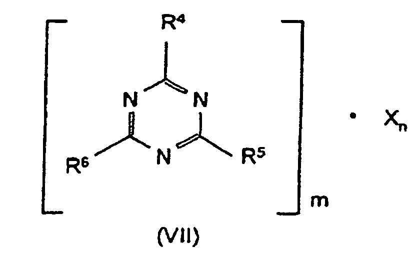 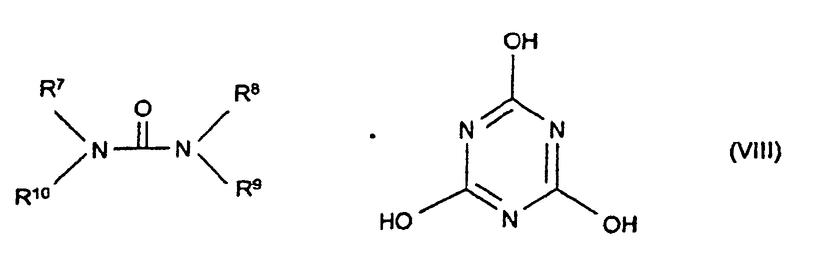 in which
R⁴ to R⁶ are hydrogen, C₁-C₈-alkyl, C₅-C₁₆-cycloalkyl or -alkylcycloalkyl, possibly substituted by a hydroxyl or a C₁-C₄-hydroxyalkyl function, C₂-C₈-alkenyl, C₁-C₈-alkoxy, -acyl, -acyloxy, C₆-C₁₂-aryl and also -O-R⁴ and -N(R⁴)R⁵ or N-alicyclic or N-aromatic, with the proviso that R⁴ to R⁶ are not simultaneously hydrogen,
R⁷ to R¹¹ are the same groups as R⁴ to R⁶, with the exception of substituents -N(R⁴)R⁵, N-alicyclic and N-aromatic,
m and n independently of one another are 1, 2, 3 or 4, and
X is acids able to form adducts with triazine compounds (III).

2. A flame retardant combination as claimed in claim 1, wherein M is aluminum ions.

3. A flame retardant combination as claimed in claim 1 or 2, wherein component B comprises benzoguanamine, tris(hydroxyethyl) isocyanurate, allantoin, glycoluril, melamine cyanurate, melamine phosphate, dimelamine phosphate, melamine pyrophosphate and urea cyanurate.

4. The use of a flame retardant combination as claimed in one or more of claims 1 to 3 for flameproofing thermoplastic polymers.

5. The use of a flame retardant combination, as claimed in claim 4, for flameproofing engineering plastics of the type polystyrene-HI, polyphenylene ethers, polyamides, polyesters, polycarbonates and blends or polyblends of the type ABS or PC/ABS.

6. The use of a flame retardant combination, as claimed in claim 4, for flameproofing polyesters.

7. The use of a flame retardant combination, as claimed in one or more of claims 4 to 6, wherein component A and B are employed independently of one another each in a concentration of from 1 to 30% by weight, based on the finished polymer compound.

8. The use of a flame retardant combination, as claimed in one or more of claims 4 to 6, wherein component A and B are employed independently of one another each in a concentration of from 3 to 20% by weight, based on the finished polymer compound.

9. The use of a flame retardant combination, as claimed in one or more of claims 4 to 6, wherein component A and B are employed independently of one another each in a concentration of from 5 to 15% by weight, based on the finished polymer compound.

10. A flameproofed thermoplastic polymer molding compound comprising a flame retardant combination as claimed in one or more of claims 1 to 3.

11. A thermoplastic polymer molding compound as claimed in claim 10, wherein the polymer is an engineering plastic of the type polystyrene-HI, polyphenylene ethers, polyamides, polyesters, polycarbonates and blends or polyblends of the type ABS or PC/ABS.

12. A thermoplastic polymer molding compound as claimed in claim 10, wherein the polymer is a polyester.

## Revendications

1. Combinaison synergique d'agents ignifuges pour des polymères thermoplastiques, contenant comme constituant A un sel d'acide phosphinique de formule (I) et/ou un sel d'acide diphosphinique de formule (II) et/ou leurs polymères 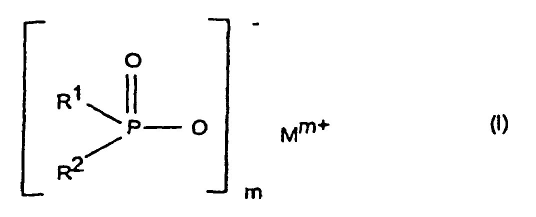 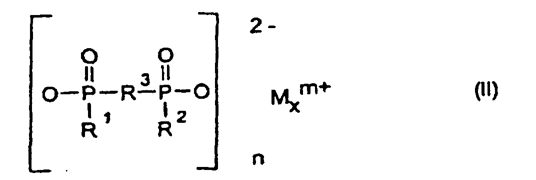 où
R¹, R² représentent un groupe alkyle en C₁-C₆, de préférence en C₁-C₄, linéaire ou ramifié;
R³ représente un groupe alkylène en C₁-C₁₀ linéaire ou ramifié;
M représente des ions calcium, aluminium, zinc;
m est 2 ou 3;
n est 1 ou 3;
x est 1 ou 2,
et, comme constituant B, des composés azotés des formules (III) à (VIII) ou un de leurs mélanges: 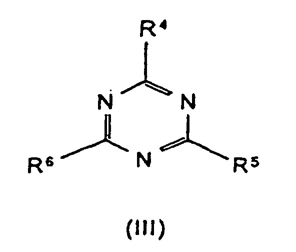 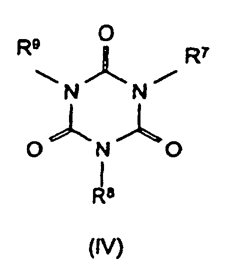 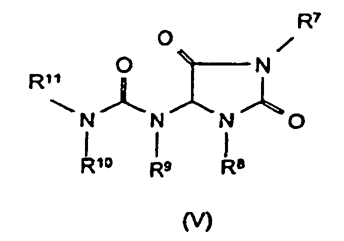 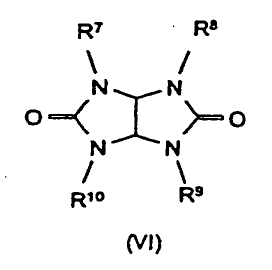 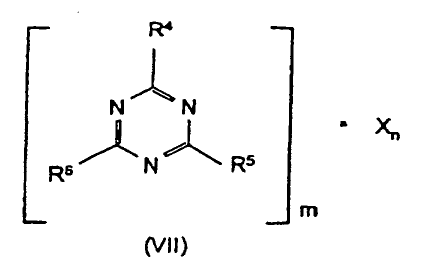 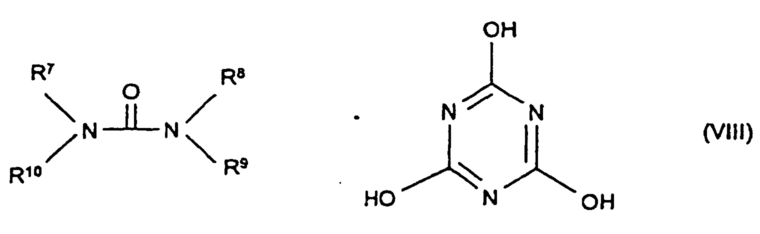 où
R⁴ à R⁶ représentent l'hydrogène, un groupe alkyle en C₁-C₈, un groupe cycloalkyle ou alkylcycloalkyle en C₅-C₁₆, pouvant être substitué par une fonction hydroxy ou hydroxyalkyle en C₁-C₄, un groupe alcényle en C₂-C₈, un groupe alcoxy, acyle ou acyloxy en C₁-C₈, un groupe aryle en C₆-C₁₂ ou un groupe -O-R⁴ et -N(R⁴)R⁵ ou N-alicyclique ou N-aromatique, à condition que R⁴ à R⁶ ne représentent pas l'hydrogène en même temps,
R⁷ à R¹¹ désignent les mêmes groupes que R⁴ à R⁶, à l'exception des substituants -N(R⁴)R⁵, N-alicyclique et N-aromatique,
m et n sont indépendamment l'un de l'autre 1, 2, 3 ou 4,
X représente des acides qui peuvent former des produits d'addition avec les composés de triazine (III).

2. Combinaison d'agents ignifuges selon la revendication 1, **caractérisée en ce que** M désigne des ions aluminium.

3. Combinaison d'agents ignifuges selon la revendication 1 ou 2, **caractérisée en ce que** le constituant B est la benzoguanamine, l'isocyanurate de tris(hydroxyéthyle), l'allantoïne, le glycolurile, le cyanurate de mélamine, le phosphate de mélamine, le phosphate de dimélamine, le pyrophosphate de mélamine et le cyanurate d'urée.

4. Utilisation d'une combinaison d'agents ignifuges selon l'une ou plusieurs des revendications 1 à 3 pour l'ignifugation de polymères thermoplastiques.

5. Utilisation d'une combinaison d'agents ignifuges selon la revendication 4 pour l'ignifugation de matières plastiques techniques du type du polystyrène choc, du poly(éther de phénylène), des polyamides, des polyesters, des polycarbonates et des mélanges ou polyblends de type ABS ou PC/ABS.

6. Utilisation d'une combinaison d'agents ignifuges selon la revendication 4 pour l'ignifugation de polyesters.

7. Utilisation d'une combinaison d'agents ignifuges selon l'une ou plusieurs des revendications 4 à 6, **caractérisée en ce que** les constituants A et B sont utilisés chacun, indépendamment l'un de l'autre, à une concentration de 1 à 30 % en masse par rapport à la composition de polymère finale.

8. Utilisation d'une combinaison d'agents ignifuges selon l'une ou plusieurs des revendications 4 à 6, **caractérisée en ce que** les constituants A et B sont utilisés chacun, indépendamment l'un de l'autre, à une concentration de 3 à 20 % en masse par rapport à la composition de polymère finale.

9. Utilisation d'une combinaison d'agents ignifuges selon l'une ou plusieurs des revendications 4 à 6, **caractérisée en ce que** les constituants A et B sont utilisés chacun, indépendamment l'un de l'autre, à une concentration de 5 à 15 % en masse par rapport à la composition de polymère finale.

10. Composition à mouler à base d'une matière plastique thermoplastique ignifugée, contenant une combinaison d'agents ignifuges selon l'une ou plusieurs des revendications 1 à 3.

11. Composition à mouler à base d'une matière plastique thermoplastique selon la revendication 10, **caractérisée en ce que** la matière plastique est une matière plastique technique du type du polystyrène choc, du poly(éther de phénylène), des polyamides, des polyesters, des polycarbonates et des mélanges ou polyblends de type ABS ou PC/ABS.

12. Composition à mouler à base d'une matière plastique thermoplastique selon la revendication 10, **caractérisée en ce que** la matière plastique est un polyester.
